# EUROPÄISCHE PATENTSCHRIFT

(11) **EP 3 277 574 B1**
(45) Veröffentlichungstag und Bekanntmachung des Hinweises auf die Patenterteilung: **20.11.2019**
(21) Anmeldenummer: 15785062.9
(22) Anmeldetag: 05.10.2015
(51) Int. Cl.: B60L 50/60

(54) **AUFBLASBARES SURFBRETT MIT ELEKTRISCHEM ANTRIEB**
INFLATABLE SURF BOARD WITH AN ELECTRIC DRIVE
PLANCHE DE SURF GONFLABLE COMPORTANT UN DISPOSITIF D'ENTRAÎNEMENT ÉLECTRIQUE

(30) Priorität: 07.10.2014 DE 102014114549; 10.03.2015 DE 102015103503
(43) Veröffentlichungstag der Anmeldung: 07.02.2018
(73) Patentinhaber: Lampuga GmbH, 76437 Rastatt (DE)
(72) Erfinder: KÖHNSEN, Benjamin, 23683 Scharbeutz (DE)
(74) Vertreter: Groth, Wieland
(86) Internationale Anmeldenummer: PCT/EP2015/072930
(87) Internationale Veröffentlichungsnummer: WO 2016/055410

(56) Entgegenhaltungen:
- WO-A1-2005/058685
- WO-A2-2011/100654
- DE-A1- 3 627 931
- DE-U1-202012 008 858
- US-A- 4 020 782
- US-A1- 2003 167 991
- US-A1- 2013 059 489

## Beschreibung

Die Erfindung betrifft ein Surfbrett.

Surfbretter sind im Stand der Technik beispielsweise aus der DE 20 2011 051 071.9 hinlänglich bekannt. Bei diesem Surfbrett ist ein fester Rumpf vorgesehen, in dessen Heckabschnitt ein Jetantrieb eingebaut ist. Der Jetantrieb wird mittels einer Fernsteuerung gesteuert. Das Surfbrett ist schwer und sperrig und daher nur umständlich transportierbar.

Aus der WO 2013 036 536 A2 ist sowohl ein aufblasbares Schlauchboot mit einer Antriebseinheit bekannt als auch ein Surfbrett, das in seinem Mittelteil eine wahlweise einsetzbare Antriebseinheit oder eine die Unterwasserfläche abschließende Unterwasserflächeneinheit aufweist. Nachteiligerweise ist eine Steuerung dieses aufblasbaren Surfbrettes nur schwer möglich. Zudem ist der Wirkungsgrad von einem in der Mitte liegenden Jetantrieb niedrig, weil Wasser zunächst angesaugt und dann nach unten wieder in das Meerwasser ausgestoßen werden muss. Ein Antrieb im mittleren Bereich ist für schnelles Fahren auch nachteilig, da das Surfbrett beim schnellen Fahren vorwiegend auf dem hinteren Bereich fährt und der Antrieb im mittleren Bereich Luft ziehen würde.

Die US 2013/0059489 A1 offenbart ein aufblasbares Surfboard mit einer mittig im Board angeordneten Kammer für Teile des Antriebs. Der Antrieb ist schwierig am Surfboard zu montieren und ermöglicht kein schnelles Zusammenfalten des Surfboards.

In der US 2003/0167991 A1 ist ein herkömmliches hartes Surfboard mit einem an einer Finne angeordneten zusätzlichen Antrieb offenbart. Das Surfboard ist nachteiligerweise sehr sperrig.

Es ist Aufgabe der vorliegenden Erfindung, ein Surfbrett zur Verfügung zu stellen, das die oben genannten Nachteile vermeidet.

Die Aufgabe wird durch ein eingangs genanntes Surfbrett mit den Merkmalen des Anspruchs 1 gelöst.

Die Erfindung macht von der Idee Gebrauch, das Surfbrett in zwei Teile zu zerlegen, in ein aufblasbares Rumpfbauteil und ein Antriebsbauteil, wobei das Antriebsbauteil einen elektrischen Antrieb aufweist und ein Heck des Surfbretts ausbildet oder zumindest mit ausbildet. Das Surfbrett ist durch die Ausbildung des Antriebsbauteils als Heck besonders gut steuerbar, und es hat einen höheren Wirkungsgrad. Darüber hinaus ist es einfach und handlich transportierbar, wenn die Luft aus dem Rumpfbauteil herausgelassen ist.

Günstigerweise ist das Antriebsbauteil lösbar mittels des Befestigungsmittels am Rumpfbauteil angeordnet. Dadurch kann das Surfbrett in die beiden Bauteile zerlegt und besonders leicht transportiert werden.

Vorzugsweise weist das Befestigungsmittel einen Einschubmechanismus auf. Damit ist eine einfache Montage und Demontage gewährleistet.

In einer anderen Ausführungsform der Erfindung ist das Antriebsbauteil mittels eines Klebemittels dauerhaft am Rumpfbauteil befestigt. Dadurch ist eine besonders dauerhafte Verbindung der beiden Bauteile zur Verfügung gestellt. Der Klebstoff ist vorzugsweise temperatur- und wasserbeständig.

Günstigerweise umfasst der elektrische Antrieb einen Jet-Antrieb. Dadurch wird ein besonders leistungsstarkes Surfbrett zur Verfügung gestellt. Der Jet-Antrieb ist besonders unempfindlich, weil ein Propeller geschützt in einem Kanal angeordnet ist.

Der elektrische Antrieb kann auch einen Propeller umfassen, der unterhalb der Unterwasserfläche vorgesehen ist und wie eine herkömmliche Schiffsschraube ausgebildet ist.

Die Erfindung macht in einer besonderen Ausführungsform von der Idee Gebrauch, das Surfbrett in zwei Teile zu zerlegen, in ein aufblasbares Rumpfbauteil mit einem Heck und einer am Heck angeordneten Aussparung sowie ein Antriebsbauteil mit Außenabmessungen, die Innenabmessungen der Aussparung in einem aufgeblasenen Zustand des Rumpfbauteils angepasst sind, wobei das Antriebsbauteil einen elektrischen Antrieb aufweist. Das Rumpfbauteil weist vorzugsweise ein Ventil auf, über das das Rumpfbauteil mit Luft befüllt und über das Luft auch ausgelassen werden kann. Das Antriebsbauteil ist lösbar in der Aussparung montiert. Dadurch kann das Surfbrett leicht demontiert und platzsparend transportiert werden.

Das Antriebsbauteil weist vorzugsweise ein starres Außengehäuse auf, um insbesondere Einrichtungen wie einen Akkumulator, einen elektrischen Motor beispielsweise als Teile eines Jetantriebs zu beherbergen.

Das Antriebsbauteil kann an einer Unterwasserfläche einen Wassereinlass und am heckseitigen Ende einen Wasserauslass mit einer verschwenkbaren oder starren Düse aufweisen und einen in einer Rohrverbindung zwischen Wassereinlass und Wasserauslass angeordneten Propeller, der über den elektrischen Antrieb angetrieben wird und in Form eines Jetantriebes einen Vorschub eines aufgeblasenen, zusammengebauten Surfbrettes gestattet. Die Düse kann verschwenkbar mittels einer Steuereinrichtung vorgesehen sein. An der Unterwasserfläche des Antriebsbauteils können darüber hinaus eine oder mehrere Finnen angeordnet sein. Auch die Finne kann fest oder verschwenkbar ausgebildet sein: Die Schwenkbewegung der Finne kann mittels eines Stellantriebs, der über den Akkumulator mit Strom versorgt wird, erfolgen. Auch die Stellung der Finne kann über eine Steuereinheit gesteuert werden. Die Stellung der Düse und/oder der Finne kann mittels einer Fernsteuerung, die der Surfer in der Hand hält, gesteuert werden. Es ist auch denkbar, die Steuerung mittels Sensoren, die eine Kippbewegung des Surfbrettes um seine Längsachse erfassen, zu gestalten.

In einer besonders bevorzugten Ausführungsform der Erfindung ist das Rumpfbauteil aus einem Drop Stitch Material gefertigt. Das Drop Stitch Material wird im Drop Stitch Verfahren hergestellt, bei dem zwei oder mehrere Kunststoffgewebebahnen, vorzugsweise Denier-Polyester-Gewebebahnen übereinander gelegt werden. Die beiden Kunststoffgewebebahnen werden durch eine Vielzahl, d. h. tausenden von Polyesterfäden miteinander verbunden. Dabei werden die beiden Gewebebahnen auf Abstand zueinander gehalten, sodass der zwischen den Gewebebahnen mit Polyesterfäden gefüllte Raum später mit Druckluft gefüllt werden kann. Die Polyesterfäden werden beispielsweise mit Hilfe einer Dropdown-Stich Nähmaschine beidseitig mit den beiden Gewebebahnen vernäht. Die beiden miteinander vernähten Gewebebahnen bilden das Stützgerüst, das dem Rumpfbauteil im aufgeblasenen Zustand seine mechanische Festigkeit verleiht.

Die beiden miteinander verbundenen Gewebebahnen werden auf die gewünschte Form zugeschnitten. Die obere und untere Gewebebahn werden mit PVC-Schichten, vorzugsweise mit drei Schichten, beschichtet, schichtweise gepresst und verklebt. Die Seiten werden mit Nahtband überlappend verklebt und gepresst, sodass das luftdichte Rumpfbauteil entsteht.

Das Drop Stitch Verfahren ermöglicht es, das aufblasbare Rumpfbauteil mit hervorragenden mechanischen Festigkeitseigenschaften zu fertigen, die sowohl hohen Zug- als auch Druckbelastungen und Scherbelastungen standhalten.

Die Drop Stitch Außenhaut des aufblasbaren Rumpfbauteils ist luftdicht und im aufgeblasenen Zustand ausgesprochen verformungsstabil, sodass ein Surfer auch unter Beibehaltung der Außenform des aufgeblasenen Rumpfbauteils auf dem Rumpfbauteil stehen und surfen kann. Das Rumpfbauteil ist mit Hochdruck befüllt. Die Befüllung kann mittels eines Kompressors erfolgen. Der Kompressor kann mit der Energie der im Surfbrett eingebauten Batterie gespeist werden.

Das aus dem Drop Stitch Material gefertigte Rumpfbauteil ist vorzugsweise geräuscharm, weil die Lautstärke, die durch Wellenschlag, aber auch den Antrieb erzeugt wird, durch den Rumpf gedämpft wird. Das Rumpfbauteil ist während des Betriebs schwingungsarm, weil durch das Drop Stitch Material Schwingungen reduziert werden. Da der Rumpf leicht verformbar ist, werden Stöße durch Wellen u. s. w. vorteilhafterweise aufgefangen. Des Weiteren ist vorteilhaft, dass der, gegenüber herkömmlichen Surfbrettern, weichere Rumpf weniger Verletzungen hervorruft, wenn das Surfbrett bei einem Herunterfallen des Surfers mit dem Surfer kollidiert.

Vorzugsweise fluchtet eine Trittfläche des Anbauteils mit einer Trittfläche eines aufgeblasenen Rumpfbauteils, sodass eine gemeinsame Gesamttrittfläche durch das Rumpfbauteil und das Antriebsbauteil ausgebildet wird. Dazu sollte das Antriebsbauteil formschlüssig ohne Spaltausbildung in die Aussparung einsetzbar sein.

Günstigerweise fluchtet auch die Unterwasserfläche des Antriebsbauteils mit einer Unterwasserfläche des aufgeblasenen Rumpfbauteils, sodass eine glatte, über die gesamte Längsausdehnung des Surfbrettes ausgebildete Unterwasserfläche entsteht, die ein Gleiten des Surfbrettes befördert.

Vorzugsweise weist die Aussparung einen Rahmen auf, der mit Befestigungsmitteln versehen ist, und das Antriebsbauteil weist mit den Befestigungsmitteln zusammenwirkende komplementäre Befestigungsmittel auf. Der Rahmen kann beispielsweise an seitlichen Wangen der Aussparung des aufgeblasenen Surfbrettes vorgesehen sein. Der Rahmen ist günstigerweise starr und verformungsstabil ausgebildet. Es kann sich dabei um einen Kunststoffrahmen oder einen Metallrahmen, insbesondere einen Aluminiumrahmen handeln.

Vorzugsweise weist die Aussparung in einem Querschnitt senkrecht zu einer Längsrichtung des Rumpfbauteils parallel zur Unterwasserfläche verlaufende Auflageflächen auf, die mit jeweils einem Befestigungsmittel versehen sind, und die Antriebseinheit weist in einem Querschnitt senkrecht zur Antriebsrichtung parallel zur Trittfläche angeordnete komplementäre Auflageflächen auf, die jeweils ein komplementäres Befestigungsmittel aufweisen, und die komplementären Auflageflächen liegen im aufgeblasenen und zusammengebauten Zustand des Surfbrettes genau auf den Auflageflächen auf. Beim Zusammenbau wird das Antriebsbauteil gleichsam von oben, also wasserabseitig in die Aussparung hineingesetzt, liegt dort auf den Auflageflächen auf und wird gegen ein Verrutschen durch vorzugsweise Schraubverbindungen gesichert.

Die Erfindung wird anhand von Ausführungsbeispielen in fünf Figuren beschrieben, dabei zeigen:
- Fig. 1: eine perspektivische Ansicht eines aufgeblasenen Rumpfbauteils eines erfindungsgemäßen Surfbrettes,
- Fig. 2: eine perspektivische Ansicht eines Antriebsbauteils des erfindungsgemäßen Surfbrettes,
- Fig. 3: eine schematische Draufsicht des erfindungsgemäßen Surfbrettes,
- Fig. 4: eine Schnittansicht entlang der Linie IV in Fig. 3,
- Fig. 5: eine zweite Ausführungsform des erfindungsgemäßen Surfbretts.

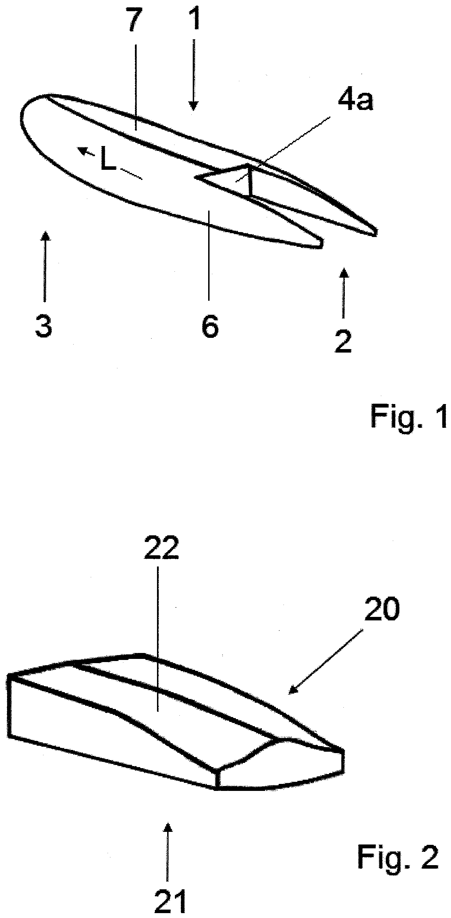

Fig. 1 zeigt ein aufgeblasenes Rumpfbauteil 1 des erfindungsgemäßen Surfbrettes. Das Rumpfbauteil 1 weist eine Längsrichtung L auf, die sich von einem Heck 2 des Rumpfbauteils 1 zu einem Bug 3 des Rumpfbauteils 1 erstreckt. Im Heck 2 des Rumpfbauteils 1 ist eine Aussparung 4 vorgesehen. Das Rumpfbauteil 1 weist eine Unterwasserfläche 6 auf und eine Trittfläche 7, die einen Teil einer Oberwasserfläche ausbildet. Auf der Trittfläche 7 steht ein Surfer während des Betriebs des Surfbrettes auf seinen Füßen, oder er kniet auf der Trittfläche 7.

Das Rumpfbauteil 1 besteht aus einem Drop Stitch Material. Unter einem Drop Stitch Material ist ein luftundurchlässiges Gewebe mit stabilisierenden Längsfäden zu verstehen. Die Aussparung 4 am Heck 2 des Rumpfbauteils 1 ist entgegen der in Längsrichtung L üblicherweise ausgerichteten Fahrtrichtung offen. Zum Bug 3 des Rumpfbauteils 1 hin ist die Aussparung 4 quaderförmig und offen ausgebildet. Sie ist durch eine senkrecht zur Längsrichtung L angeordnete bugseitige Wand 4a und zwei in Längsrichtung L angeordnete seitliche Aussparungswände 4b ausgebildet. Die bugseitige sowie die beiden seitlichen Aussparungswände 4a, 4b sind im Wesentlichen senkrecht zur Trittfläche 7 ausgerichtet.

Das Rumpfbauteil 1 ist in Fig. 1 im aufgeblasenen Zustand dargestellt, allerdings ist ein Antriebsbauteil 20 nicht in das aufgeblasene Rumpfbauteil 1 eingesetzt, sodass Fig. 1 das aufgeblasene, aber nicht zusammengesetzte Surfbrett darstellt. Das Rumpfbauteil 1 in Fig. 1 ist etwa 1,00 m bis 4,00 m lang und zwischen 0,70 m und 1,00 m breit.

In Fig. 1 nicht dargestellt ist ein Ein- und Auslassventil für Luft, mit der das aufblasbare Rumpfbauteil 1 befüllt werden kann. Die Luft wird mit Hochdruck in das Rumpfbauteil 1 eingeblasen. Dazu wird in der Regel ein Kompressor verwendet.

Fig. 2 zeigt das Antriebsbauteil 20, das mit seinen Außenabmessungen den Innenabmessungen der Aussparung 4 des Rumpfbauteils 1 in Fig. 1 genau angepasst ist und formschlüssig in die Aussparung 4 einfügbar ist. Das Antriebsbauteil 20 umfasst einen Elektromotor, der günstigerweise über einen Akkumulator mit Strom versorgt werden kann, sowie an einer Unterwasserfläche 21 eine nicht dargestellte Finne. Die Finne kann verstellbar sein.

Der Antrieb kann ein Jetantrieb mit einem (nicht dargestellten) Wassereinlass an der Unterwasserfläche 21 des Antriebsbauteils 20 und einem (nicht dargestellten) Wasserauslass im Bereich einer Trittfläche 22 des Antriebsbauteils 20 sein. In einem den Wasserein- und auslass verbindenden Wasserkanal ist ein Propeller vorgesehen. Am Wasserauslass ist eine schwenkbare Düse angeordnet, durch die das Wasser entgegen der Fahrtrichtung nach hinten herausgespritzt wird. Vortrieb und Stellung der Düse können mittels einer vom Surfer in der Hand gehaltenen Fernbedienung gesteuert werden. Es ist aber auch denkbar, dass die Düse nicht verstellbar ist und die Finne verstell- und steuerbar ist. Die Steuerung kann auch durch Gewichtsverlagerung des Surfers auf dem Surfbrett erfolgen, wodurch eine Kippbewegung um eine in Längsrichtung L ausgerichtete Längsachse erzeugt wird, die mittels dafür vorgesehener im Surfbrett angeordneter Sensoren erfasst und der Steuerung zugeführt wird.

Die Ausdehnung des Antriebsbauteils 20 in Längsrichtung L beträgt etwa 1,00 m. Das Antriebsbauteil 20 ist dem aufgeblasenen Rumpfbauteil 1 in einer Außenform derart angepasst, dass die Trittfläche 7 des aufgeblasenen Rumpfbauteils 1 mit der Trittfläche 22 des Antriebsbauteils 20 im zusammengebauten Zustand fluchtet und eine ebene Gesamtfläche ausbildet. Entsprechendes gilt für die Unterwasserfläche 6 des aufgeblasenen Rumpfbauteils 1 und die Unterwasserfläche 21 des Antriebsbauteils 20.

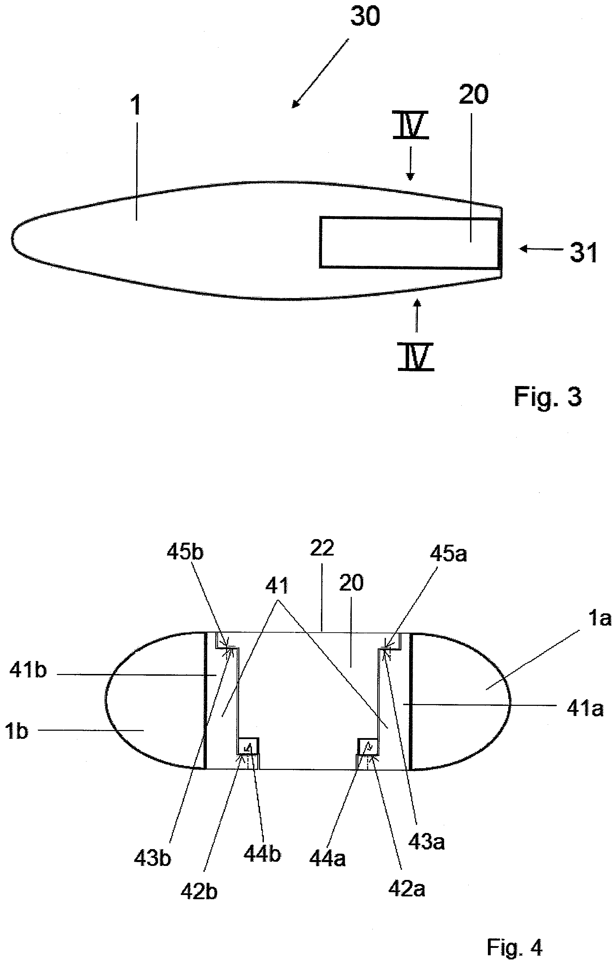

Fig. 3 zeigt eine schematische Draufsicht des Surfbrettes 30 mit dem aufgeblasenen Rumpfbauteil 1 und dem in das Rumpfbauteil 1 eingesetzten Antriebsbauteil 20. Eine heckseitige Kante des Antriebsbauteils 20 wie auch eine heckseitige Kante des aufgeblasenen Rumpfbauteils 1 fluchten miteinander und bilden eine ebene heckseitige Kante 31 des Surfbrettes 30 aus.

Fig. 4 zeigt eine Schnittansicht entlang der Linie IV-IV der Fig. 3 in einem Heckabschnitt des aufgeblasenen zusammengesetzten Surfbrettes 30. Die Schnittansicht zeigt einen Schnitt durch zwei seitliche aufgeblasene Wangen 1a, 1b des Rumpfbauteils 1, die das Antriebsbauteil 20 seitlich einfassen. In der Aussparung 4 des aufgeblasenen Rumpfbauteils 1 ist ein fester Rahmen 41 eingesetzt, der nicht aufblasbar ist und dauerhaft mit dem Rumpfbauteil 1 verbunden ist. Der feste Rahmen 41 weist zwei sich gegenüberliegende Teilrahmen 41a, 41b auf, die jeweils zwei parallel zur Unterwasserfläche 21 verlaufende Auflageflächen 42a, 43a, 42b, 43b aufweisen, die mit jeweils wenigstens einem Befestigungsmittel versehen sind. Bei dem Befestigungsmittel kann es sich beispielsweise um ein Schraubgewinde handeln. In den Rahmen 41 ist das Antriebsbauteil 20 eingesetzt. Das Antriebsbauteil 20 passt formschlüssig in den Rahmen 41. Das Antriebsbauteil 20 weist mit den Auflageflächen 42a, 43a, 42b, 43b zusammenwirkende komplementäre Auflageflächen 44a, 45a, 44b, 45b auf. Die komplementären Auflageflächen 44a, 45a, 44b, 45b sind parallel zur Trittfläche 22 vorgesehen und erstrecken sich wie die Auflageflächen 42a, 43a, 42b, 43b in Längsrichtung L des aufgeblasenen Surfbrettes 30 entlang des gesamten Rahmens 41. Das Antriebsbauteil 20 wird von oben, d. h. meeresbodenabseitig in den Rahmen 41 eingesetzt, und durch das Antriebsbauteil 20 geführte Bohrungen werden mittels Schrauben an den Gewinden der Auflageflächen 42a, 43a, 42b, 42b festgeschraubt.

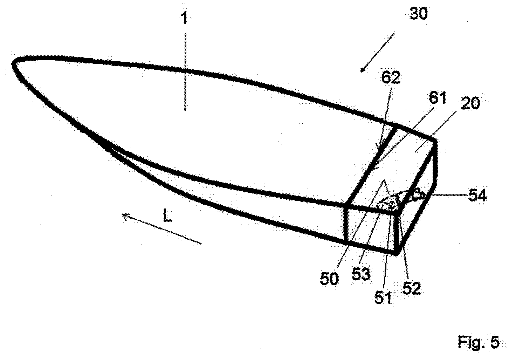

Fig. 5 zeigt eine zweite Ausführungsform des erfindungsgemäßen Surfbrettes 30, mit dem aufblasbaren Rumpfbauteil 1 und dem Antriebsbauteil 20, wobei das Rumpfbauteil 1 wiederum aus einem Drop Stitch Material besteht, das mit Hilfe einer herkömmlichen Luftpumpe, Fahrradluftpumpe oder Ähnlichem aufgepumpt werden kann, während das Antriebsbauteil 20 wie auch in den anderen Ausführungsformen einen Akku umfasst und den eigentlichen elektrischen Antrieb darstellt, der hier in Form eines Jetantriebs 50 ausgebildet ist. Das Antriebsbauteil 20 weist einen Innenraum auf, der gegen Wassereintritt abgedichtet ist, indem die Elektrik für den Jetantrieb 50 vorgesehen ist. Der Jetantrieb 50 weist einen in einem Wasserkanal 51 angeordneten Propeller 52 auf, der Wasser durch eine Öffnung 53 an der Unterwasserfläche 21 des Antriebsbauteils 20 einsaugt und oberhalb der Wasseroberfläche über eine Düse 54 herausspritzt, um dadurch einen Vorschub zu erzielen. Das Antriebsbauteil 20 weist eine Breite senkrecht zur Längsrichtung L des Surfbrettes 30 auf, die der Breite des Surfbrettes 30 selbst entspricht. Es sind hier keine seitlichen Wangen 1a, 1b vorgesehen.

Das Surfbrett 30 weist an seinem heckseitigen Ende 2 eine ebene Kontaktfläche 61 auf, das Antriebsbauteil 20 weist eine ebene dazu komplementäre Kontaktfläche 62 auf, die Form und Abmessungen der Kontaktfläche 61 korrespondierend übernimmt. Die beiden Kontaktflächen 61, 62 können dauerhaft verklebt werden mittels eines temperatur- und wasserresistenten Klebstoffes, oder in einer dritten Ausführungsform der Erfindung kann das Antriebsbauteil 20 über einen Einsteckmechanismus oder Ähnliches an dem Rumpfbauteil 1 lösbar befestigt sein. Das Antriebsbauteil 20 wird dazu mittels T-förmiger Schienen in zwei U-Profilschienen mit an freien Enden nach innen geknickten seitlichen U-Wandungen eingeschoben und zusätzlich mittels Schrauben oder ähnlicher Vorrichtungen lösbar befestigt, sodass während des Betriebs des Surfbrettes 30 ein Herausrutschen des Antriebsbauteils 20 aus dem Rumpfbauteil 1 verhindert wird. Das Surfbrett 30 ist in der zweiten und dritten Ausführungsform besonders schmal gehalten, da auf seitliche Wangen 1a, 1b verzichtet werden kann. Die Kontaktfläche 52 des Antriebsbauteils 20 und die Kontaktfläche 61 des Rumpfbauteils 1 müssen nicht notwendigerweise plan ausgebildet sein. Sie können auch gewellt sein oder andere Formen aufweisen. Sie sollten jedoch aufeinander abgestimmt sein, sodass eine möglichst große gemeinsame Berührungsfläche ausgebildet wird.

### Bezugszeichenliste

- 1: Rumpfbauteil
- 1a: seitlich aufgeblasene Wangen
- 1b: seitlich aufgeblasene Wangen
- 2: Heck
- 3: Bug
- 4: Aussparung
- 4a: bugseitige Wand
- 4b: seitliche Aussparungswände

- 6: Unterwasserfläche des Rumpfbauteils
- 7: Trittfläche des Rumpfbauteils

- 20: Antriebsbauteil
- 21: Unterwasserfläche des Antriebsbauteils
- 22: Trittfläche des Antriebsbauteils

- 30: Surfbrett
- 31: ebene heckseitige Kante

- 41: Rahmen
- 41a: Teilrahmen
- 41b: Teilrahmen

- 42a: Auflagefläche
- 42b: Auflagefläche
- 43a: Auflagefläche
- 43b: Auflagefläche

- 44a: komplementäre Auflagefläche
- 44b: komplementäre Auflagefläche
- 45a: komplementäre Auflagefläche
- 45b: komplementäre Auflagefläche

- 50: Jetantrieb
- 51: Wasserkanal
- 52: Propeller
- 53: Öffnung
- 54: Düse

- 61: Kontaktfläche
- 62: komplementäre Kontaktfläche

- L: Längsrichtung

## Patentansprüche

1. Surfbrett mit einem aufblasbaren Rumpfbauteil (1) mit einem Heck (2) und einem am Heck (2) angeordneten Befestigungsmittel für ein Antriebsbauteil (20), wobei das Antriebsbauteil (20) einen elektrischen Antrieb aufweist und das Rumpfbauteil (1) eine am Heck (2) angeordnete Aussparung (4) aufweist und das Antriebsbauteil (20) Außenabmessungen aufweist, die Innenabmessungen der Aussparung (4) in einem aufgeblasenen Zustand angepasst sind, und das Antriebsbauteil (20) lösbar in der Aussparung (4) montiert ist.

2. Surfbrett nach Anspruch 1,
**dadurch gekennzeichnet, dass** das Antriebsbauteil (20) lösbar mittels des Befestigungsmittels am Rumpfbauteil (1) angeordnet ist.

3. Surfbrett nach Anspruch 2,
**dadurch gekennzeichnet, dass** das Befestigungsmittel einen Einschubmechanismus aufweist.

4. Surfbrett nach Anspruch 1,
**dadurch kennzeichnet, dass** das Antriebsbauteil (20) mittels eines Klebmittels dauerhaft am Rumpfbauteil (1) befestigt ist.

5. Surfbrett nach Anspruch 1,
**dadurch gekennzeichnet, dass** der elektrische Antrieb einen Jet-Antrieb (50) umfasst.

6. Surfbrett nach einem der Ansprüche 1 bis 5,
**dadurch gekennzeichnet, dass** der elektrische Antrieb einen Propeller (52) umfasst.

7. Surfbrett nach Anspruch 1 bis 6,
**dadurch gekennzeichnet, dass** das Antriebsbauteil (20) ein starres Außengehäuse aufweist.

8. Surfbrett nach Anspruch 1 bis 7,
**dadurch gekennzeichnet, dass** das Antriebsbauteil (20) wenigstens eine Finne aufweist, die von einer Unterwasserfläche (21) des Antriebsbauteils (20) abgeht.

9. Surfbrett nach einem der Ansprüche 1 bis 8,
**dadurch gekennzeichnet, dass** das Rumpfbauteil (1) aus einem Drop Stitch Material gefertigt ist.

10. Surfbrett nach einem der Ansprüche 1 bis 9,
**dadurch gekennzeichnet, dass** eine Trittfläche (22) des Antriebsbauteils (20) mit einer Trittfläche (7) des aufgeblasenen Rumpfbauteils (1) fluchtet.

11. Surfbrett nach einem der Ansprüche 1 bis 10,
**dadurch gekennzeichnet, dass** eine Unterwasserfläche (21) des Antriebsbauteils (20) mit einer Unterwasserfläche (6) des aufgeblasenen Rumpfbauteils (1) fluchtet.

12. Surfbrett nach einem der Ansprüche 1 bis 11,
**dadurch gekennzeichnet, dass** die Aussparung (4) einen Rahmen (41) aufweist der, mit Befestigungsmitteln versehen ist und das Antriebsbauteil (20) mit den Befestigungsmitteln zusammenwirkende komplementäre Befestigungsmittel aufweist.

13. Surfbrett nach einem der Ansprüche 1 bis 12,
**dadurch gekennzeichnet, dass** die Aussparung (4) in einem Querschnitt senkrecht zu einer Längsrichtung (L) des Rumpfbauteils (1) parallel zur Unterwasserfläche (6) verlaufende Auflageflächen (42a, 42b, 43a, 43b) aufweist, die mit jeweils einem der Befestigungsmittel versehen sind, und das Antriebsbauteil (20) in einem Querschnitt senkrecht zur Antriebsrichtung parallel zur Trittfläche (22) angeordnete komplementäre Auflageflächen aufweist (44a, 44b, 45a, 45b), die jeweils ein komplementäres Befestigungsmittel aufweisen, und die komplementären Auflageflächen (44a, 44b, 45a, 45b) im aufgeblasenen und zusammengebauten Zustand des Surfbrettes (30) auf den Auflageflächen (42a, 42b, 43a, 43b) aufliegen.

## Claims

1. Surfboard with an inflatable body component (1) with a tail (2) and a fastening means disposed on the tail (2) for a drive component (20), wherein the drive component (20) has an electrical drive and the body component (1) has a cutout (4) disposed on the tail (2) and the drive component (20) has external dimensions adapted to internal dimensions of the cutout (4) in an inflated state, and the drive component (20) is fitted releasably in the cutout (4).

2. Surfboard according to claim 1, **characterised in that** the drive component (20) is disposed releasably by means of the fastening means on the body component (1).

3. Surfboard according to claim 2, **characterised in that** the fastening means has an insertion mechanism.

4. Surfboard according to claim 1, **characterised in that** the drive component (20) is permanently fastened to the body component (1) by means of an adhesive.

5. Surfboard according to claim 1, **characterised in that** the electrical drive has a jet drive (50).

6. Surfboard according to one of claims 1 to 5, **characterised in that** the electrical drive has a propeller (52).

7. Surfboard according to claims 1 to 6, **characterised in that** the drive component (20) has a rigid outer housing.

8. Surfboard according to claim 1 to 7, **characterised in that** the drive component (20) has at least one fin which projects from an underwater surface (21) of the drive component (20).

9. Surfboard according to one of claims 1 to 8, **characterised in that** the body component (1) is manufactured from a drop stitch material.

10. Surfboard according to one of claims 1 to 9, **characterised in that** a deck (22) of the drive component (20) is aligned with a deck (7) of the inflated body component (1).

11. Surfboard according to one of claims 1 to 10, **characterised in that** an underwater surface (21) of the drive component (20) is aligned with an underwater surface (6) of the inflated body component (1).

12. Surfboard according to one of claims 1 to 11, **characterised in that** the cutout has a frame (41) which is provided with fastening means, and the drive component (20) has complementary fastening means co-operating with the fastening means.

13. Surfboard according to one of claims 1 to 12, **characterised in that** the cutout (4) has, in a cross-section, perpendicular to a longitudinal direction (L) of the body component (1), contact surfaces (42a, 42b, 43a, 43b) which extend parallel to the underwater surface (6) and are in each case provided with one of the fastening means, and the drive component (20) has, in a cross-section perpendicular to the driving direction, complementary contact surfaces (44a, 44b, 45a, 45b) which are disposed parallel to the deck (22) and in each case have a complementary fastening means, and the complementary contact surfaces (44a, 44b, 45a, 45b) lie on the contact surfaces (42a, 42b, 43a, 43b) in the inflated and assembled state of the surfboard (30).

## Revendications

1. Planche de surf avec une partie de coque gonflable (1) avec une poupe (2) et un moyen de fixation placé sur la poupe (2) pour un composant d'entraînement (20), cependant que le composant d'entraînement (20) présente un entraînement électrique et la partie coque (1) présente un évidement (4) placé sur la poupe (2) et le composant d'entraînement (20) présente des dimensions extérieures qui sont adaptées aux dimensions intérieures de l'évidement (4) dans un état gonflable et le composant d'entraînement (20) est monté amovible dans l'évidement (4).

2. Planche de surf selon la revendication 1, **caractérisée en ce que** le composant d'entraînement (20) est placé amovible sur la partie coque (1) au moyen du moyen de fixation.

3. Planche de surf selon la revendication 2, **caractérisée en ce que** le moyen de fixation présente un mécanisme d'insertion par coulissement.

4. Planche de surf selon la revendication 1, **caractérisée en ce que** le composant d'entraînement (20) est fixé à la partie coque (1) de manière permanente au moyen d'un adhésif.

5. Planche de surf selon la revendication 1, **caractérisée en ce que** l'entraînement électrique comprend une propulsion à jet (50).

6. Planche de surf selon l'une des revendications 1 à 5, **caractérisée en ce que** l'entraînement électrique comprend une hélice (52).

7. Planche de surf selon les revendications 1 à 6, **caractérisée en ce que** le composant d'entraînement (20) présente un bâti extérieur rigide.

8. Planche de surf selon les revendications 1 à 7, **caractérisée en ce que** le composant d'entraînement (20) présente au moins un aileron qui part d'une surface sous-marine (21) du composant d'entraînement (20).

9. Planche de surf selon l'une des revendications 1 à 8, **caractérisée en ce que** la partie coque (1) est fabriquée en un matériau drop stitch.

10. Planche de surf selon l'une des revendications 1 à 9, **caractérisée en ce qu'**une surface de marche (22) du composant d'entraînement (20) est alignée avec une surface de marche (7) de la partie coque gonflée (1).

11. Planche de surf selon l'une des revendications 1 à 10, **caractérisée en ce qu'**une surface sous-marine (21) du composant d'entraînement (20) est alignée avec une surface sous-marine (6) de la partie coque gonflée (1).

12. Planche de surf selon l'une des revendications 1 à 11, **caractérisée en ce que** l'évidement (4) présente un cadre (41) qui est pourvu de moyens de fixation et que le composant d'entraînement (20) présente des moyens de fixation complémentaires qui coopèrent avec les moyens de fixation.

13. Planche de surf selon l'une des revendications 1 à 12, **caractérisée en ce que** l'évidement (4) présente des surfaces d'appui (42a, 42b, 43a, 43b), qui s'étendent parallèlement à la surface sous-marine (6) dans une section perpendiculaire à un sens longitudinal (L) de la partie coque (1), qui sont pourvues respectivement d'un des moyens de fixation et que le composant d'entraînement (20) présente des surfaces d'appui complémentaires (44a, 44b, 45a, 45b), placées parallèlement à la surface de marche (22), dans une section perpendiculaire au sens d'entraînement, qui présentent chacune un moyen de fixation complémentaire et les surfaces d'appui complémentaires (44a, 44b, 45a, 45b) reposent, lorsque la planche de surf (30) est à l'état gonflé et assemblé, sur les surfaces d'appui (42a, 42b, 43a, 43b).
